(19)

Europäisches
Patentamt
European
Patent Office
Office européen
des brevets

(11) **EP 2 872 932 B1**

(12) **EUROPEAN PATENT SPECIFICATION**

(45) Date of publication and mention
of the grant of the patent:
**20.01.2021 Bulletin 2021/03**

(21) Application number: **12735133.6**

(22) Date of filing: **10.07.2012**

(51) Int Cl.:
*G01V 11/00* [(2006.01)]    *G01V 99/00* [(2009.01)]

(86) International application number:
**PCT/EP2012/063512**

(87) International publication number:
**WO 2014/008931 (16.01.2014 Gazette 2014/03)**

(54) **ANISOTROPY PARAMETER ESTIMATION**

ANISOTROPIEPARAMETERSCHÄTZUNG

ESTIMATION DE PARAMÈTRE D'ANISOTROPIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.05.2015 Bulletin 2015/21**

(73) Proprietor: **Equinor Energy AS
4035 Stavanger (NO)**

(72) Inventors:
• **RENLI, Lasse
7033 Trondheim (NO)**
• **DUFFAUT, Kenneth
7020 Trondheim (NO)**

(74) Representative: **White, Duncan Rohan
Marks & Clerk LLP
Fletcher House (2nd Floor)
Heatley Road
The Oxford Science Park
Oxford OX4 4GE (GB)**

(56) References cited:
**US-A1- 2010 312 534    US-A1- 2010 326 669
US-B2- 7 676 349**

• **LI Y: "AN EMPIRICAL METHOD FOR ESTIMATION
OF ANISOTROPIC PARAMETERS IN CLASTIC
ROCKS", THE LEADING EDGE, SOCIETY OF
EXPLORATION GEOPHYSICISTS, US, vol. 25, no.
6, 1 June 2006 (2006-06-01), pages 706-711,
XP001242849, ISSN: 1070-485X, DOI:
10.1190/1.2210052**
• **ZHIJING WANG: "Seismic anisotropy in
sedimentary rocks, part 2: Laboratory data",
GEOPHYSICS, vol. 67, no. 5, 1 September 2002
(2002-09-01), pages 1423-1440, XP055057600,
ISSN: 0016-8033, DOI: 10.1190/1.1512743**
• **BRIAN E. HORNBY ET AL: "Anisotropy correction
for deviated-well sonic logs: Application to
seismic well tie", GEOPHYSICS, vol. 68, no. 2, 1
March 2003 (2003-03-01), pages 464-471,
XP055057598, ISSN: 0016-8033, DOI:
10.1190/1.1567212**
• **FUTOSHI TSUNEYAMA ET AL: "Velocity
anisotropy estimation for brine-saturated
sandstone and shale", THE LEADING EDGE, 1
September 2005 (2005-09-01), pages 882-888,
XP055057601,**
• **KAUSHIK BANDYOPADHYAY ET AL: "Elastic
Anisotropy of Clay", SEG EXPANDED
ABSTRACTS, 1 January 2008 (2008-01-01), pages
1835-1839, XP055057602,**

EP 2 872 932 B1

**Description**

TECHNICAL FIELD

The invention relates to the field of estimating elastic anisotropy, and in particular to a method of estimating an elastic anisotropy parameter for a geological subsurface.

BACKGROUND

When modelling the properties of geological subsurfaces, the anisotropy of the subsurfaces must be taken into account. Some subsurfaces are relatively isotropic, but other subsurfaces, such as shale, display anisotropic properties. Failure to take into account the anisotropy of the subsurface can lead to errors and misinterpretation of modelled properties of the geological subsurface.

There are different ways to characterize anisotropy. In the field of geophysics, anisotropy of transversal isotropy type, with the vertical axis being the axis of symmetry (TIV), is commonly characterized using Thomsen parameters, as described in Thomsen, L., 1986, "Weak elastic anisotropy": Geophysics, 51, 1954-1966. Thomsen parameters are dimensionless ratios of elastic modulus tensor elements. The Thomsen parameters are:

$$\varepsilon = \frac{C_{11} - C_{33}}{2C_{33}} \qquad \text{(Eq. 1)}$$

$$\gamma = \frac{C_{66} - C_{44}}{2C_{44}} \qquad \text{(Eq. 2)}$$

$$\delta = \frac{(C_{13} + C_{44})^2 - (C_{33} - C_{44})^2}{2C_{33}(C_{33} - C_{44})} \qquad \text{(Eq. 3)}$$

$C_{ij}$ is an elastic modulus tensor (in Voigt notation) that characterizes the elasticity of the medium. The Thomsen parameters typically have a value of less than 1 for layered rock subsurfaces.

For some types of subsurface, such as shale, the degree of anisotropy is directly affected by the porosity. This is because, as a shale formation is compacted, porosity decreases and platelets align preferentially, leading to more pronounced anisotropy. Older shale formations therefore tend to exhibit a higher degree of anisotropy than young shale formations.

The following equations (Wang, Z., 2002, "Seismic anisotropy in sedimentary rocks, part 2: Laboratory data", Geophysics 67, 1423-1440) illustrate how Thomsen parameters can be derived using only porosity:

$$\varepsilon = 0.35486e^{-7.417\phi} \qquad \text{(Eq. 4)}$$

$$\gamma = 0.43461e^{-10.304\phi} \qquad \text{(Eq. 5)}$$

where $\Phi$ denotes porosity. The porosity $\Phi$ in this example was calculated from the weight of samples before and after drying under room temperature. The constants are derived empirically using linear regression on core plug measurements, and are specific to a particular type of lithology (in this case, pure shale). Using this model it is possible to predict $\varepsilon$ and $\gamma$ only using porosity. While this model requires only porosity as input to find $\varepsilon$ and $\gamma$, it is intended to be used only for pure shale subsurfaces, and the modelled anisotropy has a high degree of uncertainty. Furthermore, the model is not directly related to the volume fraction of clay minerals which is believed to be an important parameter for prediction of anisotropy in shale subsurfaces. A further limitation of this model is that studies on anisotropy estimation from log data have indicated that the elastic anisotropy is not necessarily related to porosity. It is therefore possible that estimating Thomsen parameters using porosity will not always give meaningful results.

Hornby B., Howie J.M., and Ince D.W., 2003, "Anisotropy correction for deviated-well sonic logs: Application to seismic well tie", Geophysics 68, Vol 68, 464-471, describes a technique for calculating $\varepsilon$ and $\delta$ when the subsurface in question is not a pure shale, as follows:

$$\varepsilon = V_{SH}\varepsilon_{sh} \qquad\qquad (Eq.\ 6)$$

$$\delta = V_{SH}\delta_{sh} \qquad\qquad (Eq.\ 7)$$

$\varepsilon_{sh}$ and $\delta_{sh}$ are the Thomsen parameters for pure shale and $V_{SH}$ is the volume fraction of shale. If $V_{SH}$ falls below an input reference value, then the rock is assumed to be isotropic. This technique is only claimed to be valid for $\varepsilon$ and $\delta$, but not $\gamma$. Furthermore, the model requires calibration from a range of wells with different deviations. In this technique, the anisotropy of the subsurface is proportional to $V_{SH}$ which usually has a value of 1 in a non-reservoir section of a well, including the overburden according to the definition of shale. As various amounts of clay contained in a shale subsurface give rise to anisotropy, even if $V_{SH}$ is equal to one, the clay mineral fraction can be low.

SUMMARY

It is an object of the invention to provide a way to estimate anisotropy parameters for geological subsurfaces. These may be used in rock physics models where, for example, estimates of the anisotropy parameters cannot be obtained from other sources. According to a first aspect, there is provided a method of estimating a rock physics model anisotropic parameter for a geological subsurface. A volume fraction of dry clay minerals present in the geological subsurface is determined based on well-log data. A total porosity of the geological subsurface is also determined based on well-log data. A value for the anisotropic parameter is determined using the volume fraction of dry clay minerals in the geological subsurface, the total porosity of the geological subsurface, and empirically derived constants.

The anisotropic parameter may be a Thomsen $\gamma$ parameter. An optional way to estimate the anisotropic parameter is using the equation $\gamma = aV_{cldry}^{b}e^{-c\phi_t}$ where a, b and c are said empirically derived constants, $V_{cldry}$ is the volume fraction of dry clay minerals and $\Phi_t$ is the total porosity. The method optionally further comprises estimating any of Thomsen parameters $\varepsilon$ and $\delta$ using the estimated value of $\gamma$ and at least one further empirically derived constant.

As an option, the method comprises determining the empirically derived constants using well log data selected from any of refracted shear data, cross-dipole shear data, low frequency Stoneley data and compressional data.

As an option, the method comprises determining an elastic modulus tensor element $C_{44}$ value for the subsurface using any of dipole shear data and refracted shear data obtained from a vertical or near vertical well. An elastic modulus tensor element Cee value is determined for the subsurface using low frequency Stoneley shear data obtained from a vertical or near vertical well. A calibration value for the anisotropic parameter is determined using elastic modulus tensor elements $C_{44}$ and $C_{66}$. Any of the empirically derived constants are determined using the determined calibration value of the anisotropic parameter. The empirically derived constants are optionally calibrated using the determined calibration value of the anisotropic parameter by performing a regression.

In the event that the empirically derived constants cannot be derived using well log data, default values for the empirically derived constants may optionally be used.

As a further option, the method comprises determining the volume fraction of dry clay minerals by using a clay index and an additional empirically derived constant.

According to a second aspect there is provided a computer apparatus arranged to estimate a rock physics model anisotropic parameter for a geological subsurface. The apparatus comprises a processor configured to receive a volume fraction of dry clay minerals present in the geological subsurface, determined based on well-log data, receive a total porosity value of the geological subsurface, determined based on well-log data, determine a value for the anisotropic parameter using the volume fraction of dry clay minerals in the geological subsurface, the total porosity value of the geological subsurface, and empirically derived constants.

The anisotropic parameter may be a Thomsen $\gamma$ parameter. In an optional embodiment, the processor is arranged to estimate $\gamma$ according to the equation $\gamma = aV_{cldry}^{b}e^{-c\phi_t}$, where a, b and c are the empirically derived constants, $V_{cldry}$ is the volume fraction of dry clay minerals and $\Phi_t$ is the total porosity. The processor is optionally further arranged to estimate any of Thomsen parameters $\varepsilon$ and $\delta$ using the estimated value of $\gamma$ and at least one further empirically derived constant.

As an option, the processor is further arranged to determine the empirically derived constants using well log data selected from any of refracted shear data, cross-dipole shear data, low frequency Stoneley data and compressional data.

The processor is optionally arranged to determine an elastic modulus tensor element $C_{44}$ value for the subsurface using any of dipole shear data and refracted shear data, determine an elastic modulus tensor element $C_{66}$ value for the subsurface using low frequency Stoneley shear data, determine a calibration value for the anisotropic parameter using elastic modulus tensor elements $C_{44}$ and $C_{66}$, and calibrate any of the empirically derived constants using the determined calibration value of the anisotropic parameter.

The computer apparatus is optionally provided with a database arranged to store values for any of the empirically derived constants.

BRIEF DESCRIPTION OF THE DRAWINGS

Figure 1 is a graph showing Thomsen gamma parameters against volume fraction of dry clay for different values of total porosity;

Figure 2 is example data for a locally calibrated $\gamma$-prediction on the basis of dry clay mineral fraction and total porosity;

Figure 3 is a flow diagram illustrating steps according to an embodiment of the invention; and

Figure 4 illustrates schematically in a block diagram an apparatus according to an embodiment of the invention.

DETAILED DESCRIPTION

A model is described that can be used to predict anisotropy parameters. In the examples given below, the term anisotropy is used to refer to elastic dynamic vertical transverse isotropic (VTI) anisotropy. Shale subsurfaces are provided as examples of geological subsurfaces to which the model applies, but it will be appreciated that the model may be applied to any type of geological subsurface that displays anisotropic properties. Thomsen parameters, described above, are used as examples of anisotropic parameters that can be predicted.

It has been found that the Thomsen parameter $\gamma$ can be estimated using the total porosity of the shale subsurface, the volume fraction of dry clay minerals, and empirically derived constants. Furthermore, other Thomsen parameters $\delta$ and $\varepsilon$ for these subsurfaces can be estimated using the estimated value of $\gamma$ and further empirically derived constants.

A shale subsurface can be characterized as a subsurface having the presence of the following three major components:

- flat particles mainly consisting of (but not limited to) clay mineral platelets;
- round particles consisting mainly of quartz of silt and/or sand size; and
- porosity.

For a fixed clay mineral volume fraction, the relative amount of round particles and the value for porosity may vary.

The volume fraction of clay minerals and total porosity are measured or estimated using data from well logs.

An estimation of $\gamma$ is made according to Equation 8, as follows:

$$\gamma = a V_{cldry}^{b} e^{-c\phi_t} \qquad \text{(Eq. 8)}$$

where $V_{cldry}$ is the volume fraction of dry clay minerals, $\phi_t$ is the total porosity, and a, b and c are constants. The porosity term in Equation 8 accounts for the impact of the variation in porosity on anisotropy. $V_{cldry}$ and $\phi_t$ are estimated from log data.

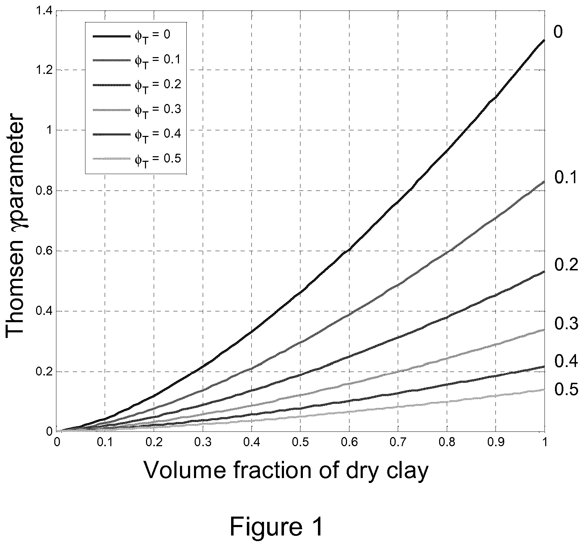

Figure 1 illustrates how $\gamma$ values increase with increasing values for the volume fraction of dry clay. It can also be seen the $\gamma$ values decrease with increasing total porosity. Constants a, b and c vary according to factors such as the type of clay minerals, depth of deposition, age, formation pressure and temperature, and so on. It is therefore desirable to calibrate the model to ensure that a, b and c give an accurate estimate for $\gamma$. Calibration is performed locally to the field and/or subsurface that is being investigated, and is discussed in more detail below.

It has also been found that $\varepsilon$ and $\delta$ can be estimated directly using the estimated value for $\gamma$ and further empirically

derived constants according to Equations 8 and 9:

$$\varepsilon = d\gamma \qquad \text{(Eq. 9)}$$

$$\delta = e\gamma \qquad \text{(Eq. 10)}$$

where d and e are further empirically derived constants.

Petrophysical practice is typically to estimate a clay index ($V_{cli}$) parameter rather than $V_{cldry}$. $V_{cli}$ has a value of 0 for the cleanest sands (because it contains no clay) and 1 for the most clay rich sands. $V_{cli}$ is often denoted as Vsh (volume fraction shale). However, $V_{cli}$ is not necessarily related directly to the volume fraction of shale, as the shale may contain silt in addition to clay minerals. In this case, $V_{cldry}$ can be related to $V_{cli}$ using Equation 11 below:

$$V_{cldry} = f \cdot V_{cli} \qquad \text{(Eq. 11)}$$

where f is a constant that typically has a value of between 0.3 and 0.7. The constant f is typically estimated using, for example, X-ray diffraction analysis where a fraction of clay minerals is found.

However, in some circumstances, a direct estimate of dry clay volume fraction can be made. This can be using, for example, advanced logging tools and/or calibration using X-ray diffraction (XRD) analysis or an equivalent, or knowledge about the clay type that is otherwise obtained.

In order to get as accurate an estimation of $\gamma$ as possible, the constants can be found by calibrating the model using well log or other available data. There are several different types of data that can be used to estimate values for $\gamma$, $\delta$ and $\varepsilon$. By comparing values for $\gamma$, $\delta$ and $\varepsilon$ found using well log (or other) data with values obtained using any of Equations 8 to 11, constants a, b, c, d, e and f can be more accurately estimated, typically using a regression procedure such as linear regression.

It will be appreciated that in each case, different well log data (such as sonic logs) may be available, and so different well log data can be use to estimate any of $\gamma$, $\delta$ and $\varepsilon$ in different ways. The following examples suggest different types of well log data that can be used to estimate values for any of $\gamma$, $\delta$ and $\varepsilon$.

1. Shear data

Shear data from vertical wells can be obtained using dipole and/ or refracted shear measurements. These data can, in combination with subsurface density measurements, be used to find the elastic modulus tensor element $C_{44}$ using Equation 12 below:

$$C_{44} = \rho_b \cdot V_{sv}^2 \qquad \text{(Eq. 12)}$$

where $\rho_b$ is the bulk density and $V_{sv}$ is the velocity of a vertically propagating shear wave from a dipole and/or refracted shear wave measurement.

Low frequency Stoneley data can be used to find elastic shear stiffness $C_{66}$ (see for example "Tang, X., 2001, "Determining formation shear-wave transverse isotropy from borehole Stoneley-wave measurements". Geophysics, 68, 118-126). Once $C_{44}$ and $C_{66}$ have been found using well log data, a calculation of $\gamma$ can be made using Equation 2.

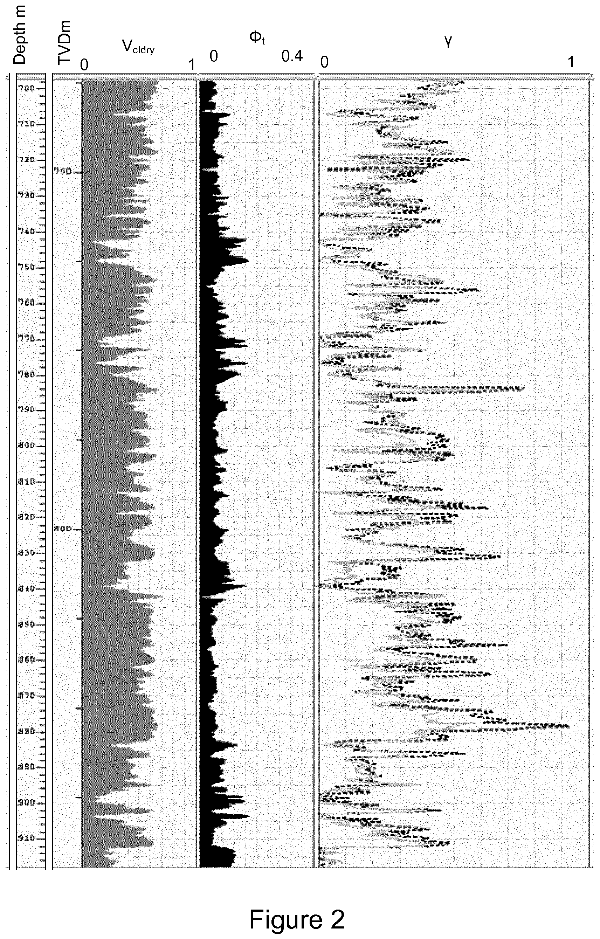

Figure 2 shows an example of $\gamma$ at different depths. The graph shows depth in metres, and True Vertical Dept (TVD) from mean sea level in metres. In this case, the values of a, b and c have been calibrated using well log data as described above. $V_{cldry}$ and $\Phi_t$ are shown. Two plots of $\gamma$ are shown; the dotted line shows $\gamma$ values that have been estimated using Stoneley wave inversion and dipole data. The solid line shows $\gamma$ values that have been estimated using $V_{cldry}$ and $\Phi_t$ according to Equation 8. In this case, constant b was adjusted to have a value of 3, whereas default values or constants a and c (1.3 and 4.5, respectively) were used.

The values for $\gamma$ estimated using Equation 8 have a good correlation with the values obtained using well log data. The model of Equation 8 can be used subsequently to predict values for $\gamma$ in other areas where well log data is not available.

2. Deviated wells

For deviated wells having a deviation higher than typically 30-40°, cross-dipole data can be used to find combinations of ε, δ, and γ, and the vertical compressional slowness ($V_{p0}$) and vertical shear slowness ($V_{s0}$) for a specific well deviation according to the Thomsen equations shown below as Equations 13.

$$V_p = V_{p0}(1 + \delta \sin^2\theta \cos^2\theta + \varepsilon \cos^4\theta)$$

$$V_{sv} = V_{s0}(1 + \frac{V_{p0}^2}{V_{s0}^2}(\varepsilon - \delta)\sin^2\theta \cos^2\theta)$$

$$V_{sh} = V_{s0}(1 + \gamma \sin^2\theta)$$

(Eq. 13)

For example, if $V_p$, $V_{sh}$ and $V_{sv}$ are measured in the same subsurface in two different wells with different well deviations θ, this will provide all 5 five parameters involved. In practice, one of the well deviations needs to be sufficiently high to observer anisotropy effects.

3. Compressional slowness

Well log data providing compressional slowness values can be used to obtain combinations of ε, δ, and $V_{p0}$, which can in turn be used to calibrate the values of an of a, b, c, d, e or f. For example if $V_p$ is measured through the same subsurface in three different wells with different well deviation θ the Thomsen equation can be used to find values for the three unknowns $V_{p0}$, δ and ε. In practice, two of the well deviations need to be significantly high so that anisotropy effects are observed. These two well deviations must also be sufficiently different (20-30 degrees)
It will be appreciated that other types of data may be used to calibrate the model of Equations 8 to 11 and find accurate values for any of a, b, c, d, e, f. Any combination of such data can be used to contribute to local calibration of the model.
In the event that insufficient well log data (or other data) is available to find values for the various constants described above, default values can be used for any or all of the constants a, b, c, d, e and f. Default values for each constant are given in Table 1. Exemplary ways to estimate these values are as follows:

Constants a, b, and c can be estimated by comparing γ estimation from advanced sonic logs in different vertical wells with model predictions using equation 8 and the constants represents a best overall fit between the two methods.

Constants d and e can be obtained from ultrasonic measurements on various core plugs

Constant f may be taken as an average dry clay mineral fraction in shales

The above ways of estimating values for constants a, b, c, d, e and f are provided by way of example only. It will be appreciated that other techniques may be used to estimate suitable values.

Table 1. Default constant values

| Constant | Value |
|----------|-------|
| a | 1.3 |
| b | 1.5 |
| c | 4.5 |
| d | 0.8 |
| e | 0.3 |
| f | 0.5 |

The values for a, b and c given above were used to obtain the γ values shown in Figure 1.

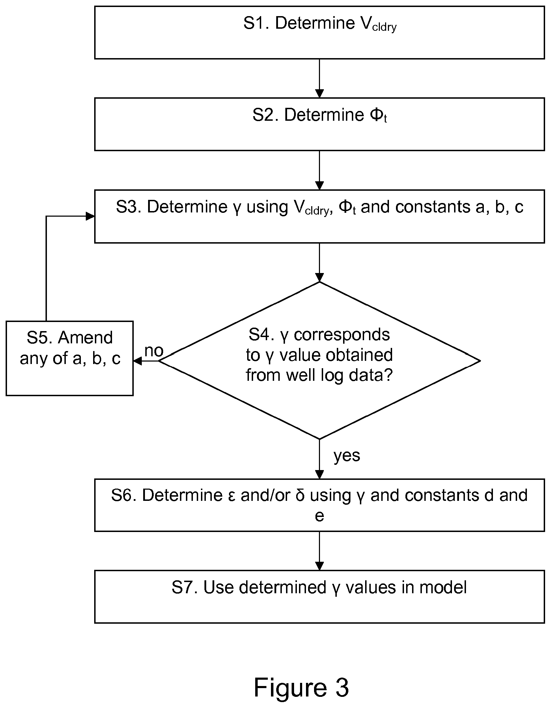

Figure 3 is a flow diagram illustrating steps for finding constants according to an embodiment of the invention. The following numbering corresponds to that of Figure 3:

S1. A value of $V_{cldry}$ is determined for the subsurface. As described above, this may be found directly or using $V_{cli}$.

S2. A value for $\Phi_t$ is determined for the subsurface.

S3. Equation 8 is used to determine $\gamma$ using $V_{cldry}$, $\Phi_t$ and constants a, b and c.

S4. If well log data is available, alternative values for $\gamma$ are found using the well log data. If the alternative values for $\gamma$ closely correspond to the values for $\gamma$ determined in step S2, then the process continues at step S6, otherwise the process continues at S5.

S5. Any of values a, b and c are amended and the process reverts to step S3. This is typically an iterative process and steps S3 to S5 are repeated until a good correlation between the values of $\gamma$ determined using Equation 8 show a good correlation with the alternative values of $\gamma$ determined using well log data.

S6. If required, values for $\varepsilon$ and $\delta$ are found using the determined values for $\gamma$ and constants d and e.

S7. The determined values for the Thomsen parameters $\gamma$, $\delta$ and/or $\varepsilon$ can then be used in a rock physics model to model the anisotropic subsurface in a region away from the well.

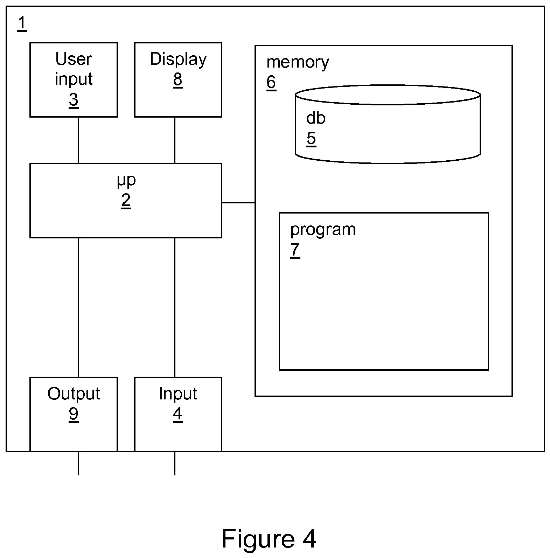

Turning now to Figure 4, there is shown a computer apparatus 1 that can be used to implement the procedures described above. The computer apparatus 1 is provided with a processor 2 for performing the calculation and determining any of the constants described above. The processor 2 may be embodied as a single processor are may be embodied as more than one physical processor.

In order for the processor 2 to determine values for $\gamma$, it requires data. There are several ways that the processor can obtain the data. The computer apparatus 1 may be provided with a user input 3, such as a touch-screen, mouse or keyboard that allows a user to enter data. The computer apparatus 1 may be provided with an input device 4 to receive data. Example of an input device 4 include as a receiver to receive data from a remote source, and an in/out device such as a disk drive. Data may also be stored at a database 5 that, in the embodiment shown in Figure 4 is illustrated as being located at a computer-readable medium in the form of a memory 6. The database 5 may be used to store values for the constants, and any of the other values mentioned above such as $\gamma$, $\Phi$, $\varepsilon$, $\delta$, and so on, in addition to relevant well log data that can be used for calculating values of $\gamma$ and calibrating the constant values.

The memory 6 may also be used to store a computer program 7 which, when executed by the processor 2, causes the processor 2 to perform any of the calculations and calibrations described above.

A display device 8 may also be provided to present data and results to a user. Alternatively or additionally, an output device 9 may be provided to allow the computer apparatus 1 to output the results of the processing to another device. This may be, for example, a printer. Alternatively, the output device 9 may be a transmitter for sending data to a remote network device.

It has been shown that log-derivable estimates for $\gamma$ can be obtained using log-derived values for total porosity and for volume fraction of dry clay minerals. Empirically derived constants are used to obtain values for $\gamma$, and these constants can be refined to give more accurate values for $\gamma$ using well log parameters such as shear and compressional log data, low frequency Stoneley data, and so on. This allows the estimates for $\gamma$ to be calibrated locally for a particular subsurface.

Furthermore, the estimates for $\gamma$ have a direct relation to the other Thomsen anisotropy parameters, $\varepsilon$ and $\delta$, for shale subsurfaces. The estimates of $\gamma$ can therefore be used to obtain estimates for $\varepsilon$ and $\delta$. These Thomsen parameters can be use in a rock physics model to model the properties of the geological subsurface or subsurface in question.

By precise definition of all input data, the explicit use of the volume of clay minerals, the direct link between all three anisotropy parameters $\gamma$, $\varepsilon$ and $\delta$, the techniques described above can be used in a large number of different situations. For example, in a mature field there may be a great deal of data available from well logs which can be used o obtain values for the constants that give very accurate estimates of the Thomsen parameters. New areas of the mature field can therefore be accurately modeled. On the other hand, in exploration areas, where less well log data is available, there may be no other way to estimate the anisotropy parameters. In this case, a reasonable estimate of the anisotropy parameters can be made using a combination of any available data and the default values for shale given in Table 1. It will be appreciated that default values may differ for different regions or different types of anisotropic geological subsurface.

It will be appreciated by the person of skill in the art that various modifications may be made to the above described embodiments without departing from the scope of the present invention as defined in the appended claims. For example, the Thomsen parameters are used as exemplary parameters describing anisotropic parameters of a geological subsurface. However, it will be appreciated that the invention may be applied to finding other types of parameters that can be used to characterise the anisotropy of a geological subsurface. Furthermore, the techniques are described with reference to shale subsurfaces, but it will be appreciated that similar techniques can be applied to other types of anisotropic geological subsurface or subsurface. Certain examples of well log data are provided that can be used to calibrate the constants and improve their accuracy. It will be realised that other types of well log data that are known to have a relationship with any of the anisotropic parameters may also be used when calibrating the values for the constants.

**Claims**

1. A method of estimating a rock physics model anisotropic parameter for a geological subsurface, the method comprising:

   determining, based on well-log data, a volume fraction of dry clay minerals present in the geological subsurface;
   determining, based on well-log data, a measured total porosity of the geological subsurface;
   determining a value for the anisotropic parameter using the volume fraction of dry clay minerals in the geological subsurface, the measured total porosity of the geological subsurface, and empirically derived constants.

2. The method according to claim 1, wherein the anisotropic parameter is a Thomsen $\gamma$ parameter.

3. The method according to claim 2, wherein the anisotropic parameter is estimated according to the equation

$$\gamma = aV_{cldry}^{b}e^{-c\phi_t}$$

   where a, b and c are said empirically derived constants, $V_{cldry}$ is the volume fraction of dry clay minerals and $\Phi_t$ is the measured total porosity.

4. The method according to claim 2 or 3, further comprising estimating any of Thomsen parameters $\varepsilon$ and $\delta$ using the estimated value of $\gamma$ and at least one further empirically derived constant.

5. The method according to any of claims 1 to 4, further comprising determining the empirically derived constants using well log data selected from any of refracted shear data, cross-dipole shear data, low frequency Stoneley data and compressional data.

6. The method according to claim 5, further comprising:

   determining an elastic modulus tensor element $C_{44}$ value for the subsurface using any of dipole shear data and refracted shear data obtained from a vertical or near vertical well;
   determining an elastic modulus tensor element $C_{66}$ value for the subsurface using low frequency Stoneley shear data obtained from a vertical or near vertical well;
   determining a calibration value for the anisotropic parameter using elastic modulus tensor elements $C_{44}$ and $C_{66}$;
   calibrating any of the empirically derived constants using the determined calibration value of the anisotropic parameter; and
   wherein the empirically derived constants are calibrated using the determined calibration value of the anisotropic parameter by performing a regression.

7. The method according to claim 5, further comprising, in the event that the empirically derived constants cannot be derived using well log data, using default values for the empirically derived constants.

8. The method according to any of claims 1 to 7, further comprising determining the volume fraction of dry clay minerals by using a clay index and an additional empirically derived constant.

9. A computer apparatus arranged to estimate a rock physics model anisotropic parameter for a geological subsurface, the apparatus comprising a processor configured to:

   receive a volume fraction of dry clay minerals present in the geological subsurface, determined based on well-log data;

receive a total porosity value of the geological subsurface, determined based on well-log data; and determine a value for the anisotropic parameter using the volume fraction of dry clay minerals in the geological subsurface, the total porosity value of the geological subsurface, and empirically derived constants.

10. The computer apparatus according to claim 9, wherein the anisotropic parameter is a Thomsen $\gamma$ parameter and the processor is arranged to estimate $\gamma$ according to the equation

$$\gamma = a V_{cldry}^{b} e^{-c\phi_t}$$

where a, b and c are said empirically derived constants, $V_{cldry}$ is the volume fraction of dry clay minerals and $\Phi_t$ is the total porosity.

11. The computer apparatus according to claim 10, wherein the processor is further arranged to estimate any of Thomsen parameters $\varepsilon$ and $\delta$ using the estimated value of $\gamma$ and at least one further empirically derived constant.

12. The computer apparatus according to any of claims 9, 10 or 11, wherein the processor is further arranged to determine the empirically derived constants using well log data selected from any of refracted shear data, cross-dipole shear data, low frequency Stoneley data and compressional data, and wherein the processor is arranged to determine an elastic modulus tensor element $C_{44}$ value for the subsurface using any of dipole shear data and refracted shear data, determine an elastic modulus tensor element $C_{66}$ value for the subsurface using low frequency Stoneley shear data, determine a calibration value for the anisotropic parameter using elastic modulus tensors element $C_{44}$ and $C_{66}$, and calibrate any of the empirically derived constants using the determined calibration value of the anisotropic parameter.

13. The computer apparatus according to any of claims 9 to 12, further comprising a database, the database arranged to store values for any of the empirically derived constants.

**Patentansprüche**

1. Verfahren zum Schätzen eines Anisotropieparameters eines gesteinsphysikalischen Modells für einen geologischen Untergrund, wobei das Verfahren Folgendes umfasst:

Bestimmen, basierend auf Bohrloch-Logging-Daten, einer Volumenfraktion an trockenen Tonmineralien, welche in dem geologischen Untergrund vorliegen;
Bestimmen, basierend auf Bohrloch-Logging-Daten, einer gemessenen Gesamtporosität des geologischen Untergrundes;
Bestimmen eines Wertes des Anisotropieparameters unter Verwendung der Volumenfraktion an trockenen Tonmineralien in dem geologischen Untergrund, der gemessenen Gesamtporosität des geologischen Untergrundes und empirisch abgeleiteter Konstanten.

2. Verfahren nach Anspruch 1, wobei der Anisotropieparameter ein Thomsen-$\gamma$-Parameter ist.

3. Verfahren nach Anspruch 2, wobei der Anisotropieparameter anhand folgender Gleichung geschätzt wird:

$$\gamma = a V_{cldry}^{b} e^{-c\phi_t}$$

wobei a, b und c die empirische abgeleiteten Konstanten sind, $V_{cldry}$ die Volumenfraktion an trockenen Tonmineralien ist und $\Phi_t$ die gemessene Gesamtporosität ist.

4. Verfahren nach Anspruch 2 oder 3, ferner umfassend Schätzen eines beliebigen der Thomsen-Parameter $\varepsilon$ und $\delta$, unter Verwendung des geschätzten Wertes von $\gamma$ und mindestens einer weiteren empirisch abgeleiteten Konstante.

5. Verfahren nach einem der Ansprüche 1 bis 4, ferner umfassend Bestimmen der empirisch abgeleiteten Konstanten unter Verwendung von Bohrloch-Logging-Daten, ausgewählt aus einem von gebrochenen Scherdaten, Querdipol-Scherdaten, niederfrequenten Stoneley-Daten und Druckdaten.

6. Verfahren nach Anspruch 5, ferner umfassend:

Bestimmen eines $C_{44}$-Wertes eines Elastizitätsmodul-Tensorelements für den Untergrund unter Verwendung eines von Dipol-Scherdaten und gebrochenen Scherdaten, welche aus einem vertikalen oder nahezu vertikalen Bohrloch erzielt wurden;
Bestimmen eines $C_{66}$-Wertes eines Elastizitätsmodul-Tensorelements für den Untergrund unter Verwendung von tieffrequenten Stoneley-Scherdaten, welche aus einem vertikalen oder nahezu vertikalen Bohrloch erzielt wurden;
Bestimmen eines Kalibrierwertes für den Anisotropieparameter unter Verwendung der Elastizitätsmodul-Tensorelemente $C_{44}$ und $C_{66}$;
Kalibrieren einer der empirisch abgeleiteten Konstanten unter Verwendung des bestimmten Kalibrierwertes des Anisotropieparameters; und
wobei die empirische abgeleiteten Konstanten unter Verwendung des bestimmten Kalibrierwertes des Anisotropieparameters anhand der Durchführung einer Regression kalibriert werden.

7. Verfahren nach Anspruch 5, ferner umfassend, falls die empirisch abgeleiteten Konstanten nicht unter Verwendung von Bohrloch-Logging-Daten abgeleitet werden können, Verwenden von Standardwerten für die empirisch abgeleiteten Konstanten.

8. Verfahren nach einem der Ansprüche 1 bis 7, ferner umfassend Bestimmen der Volumenfraktion von trockenen Tonmineralien unter Verwendung eines Tonindizes und einer zusätzlichen empirisch abgeleiteten Konstante.

9. Computergerät, geeignet zum Schätzen eines Anisotropieparameters eines gesteinsphysikalischen Modells für einen geologischen Untergrund, wobei das Gerät einen Prozessor umfasst, welcher konfiguriert ist zum:

Empfangen einer Volumenfraktion an trockenen Tonmineralien, welche in dem geologischen Untergrund vorliegen, welche basierend auf Bohrloch-Logging-Daten bestimmt wird;
Empfangen eines Gesamtporositätswertes des geologischen Untergrundes, bestimmt basierend auf Bohrloch-Logging-Daten; und
Bestimmen eines Wertes des Anisotropieparameters unter Verwendung der Volumenfraktion an trockenen Tonmineralien in dem geologischen Untergrund, des Gesamtporositätswertes des geologischen Untergrundes und empirisch abgeleiteter Konstanten.

10. Computergerät nach Anspruch 9, wobei der Anisotropieparameter ein Thomsen-$\gamma$-Parameter ist und der Prozessor geeignet ist, um $\gamma$ gemäß folgender Gleichung zu schätzen:

$$\gamma = aV_{cldry}^{b}e^{-c\phi_t}$$

wobei a, b und c die empirische abgeleiteten Konstanten sind, $V_{cldry}$ die Volumenfraktion an trockenen Tonmineralien ist und $\Phi_t$ die Gesamtporosität ist.

11. Computergerät nach Anspruch 10,
wobei der Prozessor ferner geeignet ist, um ein beliebiges der Thomsen-Parameter $\varepsilon$ und $\delta$ zu schätzen, unter Verwendung des geschätzten Wertes von $\gamma$ und mindestens einer weiteren empirisch abgeleiteten Konstante.

12. Computergerät nach einem der Ansprüche 9, 10 oder 11, wobei der Prozessor ferner geeignet ist, die empirisch abgeleiteten Konstanten unter Verwendung von Bohrloch-Logging-Daten zu bestimmen, ausgewählt aus einem von gebrochenen Scherdaten, Querdipol-Scherdaten, niederfrequenten Stoneley-Daten und Druckdaten, und wobei der Prozessor geeignet ist, einen $C_{44}$-Wert eines Elastizitätsmodul-Tensorelements für den Untergrund unter Verwendung eines von Dipol-Scherdaten und gebrochenen Scherdaten zu bestimmen, einen C66-Wert eines Elastizitätsmodul-Tensorelements für den Untergrund unter Verwendung von tieffrequenten Stoneley-Scherdaten zu bestimmen, einen Kalibrierwert für den Anisotropieparameter unter Verwendung der Elastizitätsmodul-Tensorelemente $C_{44}$ und $C_{66}$ zu bestimmen und eine der empirisch abgeleiteten Konstanten unter Verwendung des bestimmten Kalibrierwertes des Anisotropieparameters zu kalibrieren

13. Computergerät nach einem der Ansprüche 9 bis 12, ferner umfassend eine Datenbank, wobei die Datenbank geeignet ist, Werte für jede beliebige der empirisch abgeleiteten Konstanten zu speichern.

## Revendications

1. Procédé d'estimation d'un paramètre d'anisotropie de modèle de physique de roche pour un sous-sol géologique, le procédé comprenant les étapes consistant à :

   déterminer, sur la base de données de diagraphie de puits, une fraction volumique de minéraux d'argile sèche présents dans le sous-sol géologique,
   déterminer, sur la base de données de diagraphie de puits, une porosité totale mesurée du sous-sol géologique, et
   déterminer une valeur pour le paramètre d'anisotropie en utilisant la fraction volumique des minéraux d'argile sèche dans le sous-sol géologique, de la porosité totale mesurée du sous-sol géologique et de constantes déduites de manière empirique.

2. Procédé selon la revendication 1, dans lequel le paramètre d'anisotropie est un paramètre $\gamma$ de Thomsen.

3. Procédé selon la revendication 2, dans lequel le paramètre d'anisotropie est estimé selon l'équation

$$\gamma = aV_{cldry}^{b}e^{-c\phi_t}$$

dans laquelle a, b et c sont lesdites constantes déduites de façon empirique, $V_{cldry}$ est la fraction volumique des minéraux d'argile sèche et $\Phi_t$ est la porosité totale mesurée.

4. Procédé selon la revendication 2 ou 3, comprenant en outre l'estimation d'un quelconque des paramètres de Thomsen $\varepsilon$ et $\delta$ en utilisant la valeur estimée de $\gamma$ et d'au moins une constante complémentaire déduite de façon empirique.

5. Procédé selon l'une quelconque des revendications 1 à 4, comprenant en outre la détermination des constantes déduites de façon empirique en utilisant des données de diagraphie de puits sélectionnées parmi des données de cisaillement réfractées, des données de cisaillement utilisant un dipôle transversal, des données de Stoneley à basse fréquence et des données de compression.

6. Procédé selon la revendication 5, comprenant en outre les étapes consistant à :

   déterminer une valeur de l'élément tenseur $C_{44}$ du module élastique pour le sous-sol en utilisant des données de cisaillement utilisant un dipôle et des données de cisaillement réfractées obtenues à partir d'un puits vertical ou quasi-vertical,
   déterminer une valeur de l'élément de tenseur $C_{66}$ du module élastique pour le sous-sol en utilisant des données de cisaillement de Stoneley à basse fréquence obtenues à partir d'un puits vertical ou quasi-vertical,
   déterminer une valeur d'étalonnage pour le paramètre d'anisotropie en utilisant des éléments de tenseur $C_{44}$ et $C_{66}$ du module élastique,
   étalonner l'une quelconque des constantes déduites de façon empirique en utilisant la valeur d'étalonnage déterminée du paramètre d'anisotropie, et
   dans lequel les constantes déduites de façon empirique sont étalonnées en utilisant la valeur d'étalonnage déterminée en exécutant une régression.

7. Procédé selon la revendication 5, comprenant en outre, dans le cas où les constantes déduites de façon empirique ne peuvent pas être obtenues en utilisant des données de diagraphie de puits, l'utilisation de valeurs par défaut pour les constantes déduites de façon empirique.

8. Procédé selon l'une quelconque des revendications 1 à 7, comprenant en outre la détermination de la fraction volumique des minéraux d'argile sèche en utilisant un indice d'argile et d'une constante supplémentaire déduite de façon empirique.

9. Appareil informatique conçu pour estimer un paramètre d'anisotropie de modèle de physique de roche pour un sous-sol géologique, l'appareil comprenant un processeur configuré pour :

recevoir une fraction volumique de minéraux d'argile sèche présents dans le sous-sol géologique, déterminée sur la base de données de diagraphie de puits,
recevoir une valeur de porosité totale du sous-sol géologique, déterminée sur la base de données de diagraphie de puits, et
déterminer une valeur pour le paramètre d'anisotropie en utilisant la fraction volumique des minéraux d'argile sèche dans le sous-sol géologique, de la valeur de porosité totale du sous-sol géologique et de constantes déduites de manière empirique.

10. Appareil informatique selon la revendication 9, dans lequel le paramètre d'anisotropie est un paramètre $\gamma$ de Thomsen et le processeur est conçu pour estimer $\gamma$ selon l'équation :

$$\gamma = aV_{cldry}^{b}e^{-c\phi_t}$$

dans laquelle a, b et c sont lesdites constantes déduites de façon empirique, $V_{cldry}$ est la fraction volumique des minéraux d'argile sèche et $\Phi_t$ est la porosité totale.

11. Appareil informatique selon la revendication 10,
dans lequel le processeur est conçu en outre pour estimer l'un quelconque des paramètres de Thomsen $\varepsilon$ et $\delta$ en utilisant la valeur estimée de $\gamma$ et d'au moins une constante complémentaire déduite de façon empirique.

12. Appareil informatique selon l'une quelconque des revendications 9, 10 ou 11, dans lequel le processeur est conçu en outre pour déterminer les constantes déduites de façon empirique en utilisant des données de diagraphie de puits sélectionnées parmi des données de cisaillement réfractées, des données de cisaillement utilisant un dipôle transversal, des données de Stoneley à basse fréquence et des données de compression, et dans lequel le processeur est conçu en outre pour déterminer une valeur de l'élément de tenseur $C_{44}$ du module élastique pour le sous-sol en utilisant des données de cisaillement utilisant un dipôle et des données de cisaillement réfractées, déterminer une valeur de l'élément de tenseur $C_{66}$ du module élastique pour le sous-sol en utilisant des données de cisaillement de Stoneley à basse fréquence, déterminer une valeur d'étalonnage pour le paramètre d'anisotropie en utilisant des éléments de tenseur $C_{44}$ et $C_{66}$ du module élastique, et étalonner l'une quelconque des constantes déduites de façon empiriques en utilisant la valeur d'étalonnage déterminée du paramètre d'anisotropie.

13. Appareil informatique selon l'une quelconque des revendications 9 à 12, comprenant en outre une base de données, la base de données étant conçue pour stocker des valeurs pour toutes les constantes déduites de façon empirique.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **THOMSEN, L.** Weak elastic anisotropy. *Geophysics,* 1986, vol. 51, 1954-1966
- **WANG, Z.** Seismic anisotropy in sedimentary rocks, part 2: Laboratory data. *Geophysics,* 2002, vol. 67, 1423-1440
- **HORNBY B. ; HOWIE J.M. ; INCE D.W.** Anisotropy correction for deviated-well sonic logs: Application to seismic well tie. *Geophysics 68,* 2003, vol. 68, 464-471
- **TANG, X.** Determining formation shear-wave transverse isotropy from borehole Stoneley-wave measurements. *Geophysics,* 2001, vol. 68, 118-126